# EUROPEAN PATENT APPLICATION

(11) **EP 2 495 702 A1**
(43) Date of publication of application: **05.09.2012**
(21) Application number: 10826147.0
(22) Date of filing: 25.10.2010
(51) Int. Cl.: G07C 5/08, B64D 45/00, B64D 47/08, H04N 7/20

(54) **AERIAL SYSTEM FOR TRANSMITTING VIDEO AND IMAGES VIA SATELLITE IN REAL TIME**

(30) Priority: 27.10.2009 ES 200930914
(71) Applicant: Avialsa T-35, S.L., 46500 Sagunto - Valencia (ES)
(72) Inventor: ALANDI ESCRIG, Francisco Antonio, E-46500 Sagunto - Valencia (ES)
(74) Representative: Urizar Anasagasti, Jesus Maria
(86) International application number: PCT/ES2010/070685
(87) International publication number: WO 2011/051526

(57) **Abstract**

The present invention relates to an aerial system for transmitting video and images via satellite in real time, made up of two main parts: the onboard part (30) which has video and image capture sensors (1) and (2), an electronic switch (3), several encoders (4), (5) and (6), a mini PC (10), a digital storage unit (9), a UPS (8), a battery (7) and a satellite transmission system; the receiver part (31), made up of a PC (17) with Internet connection (15) which can be located anywhere in the world where the transmitted data of the sensors (1) and (2) located in the onboard part (30) will be received. The invention is particularly applicable in the aeronautical sector where, due to circumstances, it is necessary to have an aerial system for transmitting video and images via satellite in real time, with unlimited coverage and permanent connectivity such as, for example, in preventing and extinguishing fires, border surveillance tasks, etc.

## Description

### Object of the Invention

The object of the present patent invention is to present a new aerial system for transmitting video and images via satellite in real time, made up of two main parts: the unit onboard the aircraft and the receiver unit.

The onboard unit has video and image capture sensors, an electronic switch, several encoders, a mini PC, a digital storage unit, a UPS, a battery and a satellite transmission system. The system is completed by the receiver unit, which is made up of a computer with Internet connection and can be located anywhere in the world where the transmitted data of the sensors located in the part onboard the aircraft will be received.

Said aerial system for transmitting video and images via satellite in real time also allows the sensors to be controlled remotely, freeing the pilot from the work load.

This new aerial system for transmitting video and images via satellite in real time is especially conceived for being applied to the aeronautical sector where due to the circumstances it is necessary to have an aerial system for transmitting video and images via satellite in real time, with unlimited coverage and permanent connectivity such as, for example, in preventing and extinguishing fires, border surveillance tasks, pest control, flood control, crop control, school of fish control, etc.

### Background of the Invention

To date, the most common systems for transmitting video from aircraft have the drawback of having limited coverage. They have two parts, an onboard part and another receiver part.

The onboard part captures video, processes it and transmits it to a recipient located in the receiver part. This receiver part is where data is received directly, which must be located within the range of the coverage area generated by the aircraft. This implies great dependency on the relief of the terrain since it is necessary to have a line of vision between both parts, which leads to large limitations when defining possible locations of the receiver part.

Other systems have a satellite connection in the receiver part allowing them to disseminate the signal of the onboard part anywhere on the planet, but they continue to have the limit of locating this receiver part in the coverage area of the aircraft.

The problems of the use of transmission frequencies in which systems of this type can work and the maximum power allowed are added to the limit of the action range of the aircraft; each country has different laws on the use of the radio-electric spectrum and this makes the simple and fast portability of these systems to other countries difficult.

The systems mentioned herein are mainly used in unmanned aeroplanes and helicopters.

A good example to cite is patent application publication no. ES 2 133 239 called "Airborne surveillance and reconnaissance system for preventing fires". This system describes how an unmanned aircraft transports visible light and infrared sensors and communicates by means of a radio communication system with a nearby terrestrial receiver located in a vehicle where it sends the captured video.

With respect to the satellite communication systems for aircraft, the systems on the market did not provide sufficient bandwidth for transmitting videos, traditionally being aimed at voice communications, with bandwidths for data of around 9 Kbps. This bandwidth is not sufficient to send video.

New technology has recently appeared which allows increasing the data bandwidth in satellite communications. This satellite solution is used by the United States of America Forrest Service which uses a system to scan the terrain and create a map by means of images to later send it via satellite. The main differences are that its system does not transmit video and the mapping of the terrain takes a considerable amount of time since large, high definition images are taken. Its system is equipped with very bulky photographic cameras and with transmission equipment with array type antennas, with a length of around a meter. All this means that this system can only be installed in medium-large aircraft which fly at an altitude of around 10,000 feet. This system is conceived to supervise the evolution of a large fire in a very extensive area.

This aerial system for transmitting video and images via satellite in real time is mucho lighter, more portable and compact, as well as providing improved satellite communication performance and being aimed at small aircraft flying at lower altitude, giving a much more detailed and real time view of what is to be monitored.

No aerial system for transmitting video and images via satellite in real time like the one described in the present patent invention is described in the current state of the art.

### Description of the Invention

The present aerial system for transmitting video and images via satellite in real time has considerable advantages compared to previous systems. Coverage is provided by a cluster of geostationary satellites giving connectivity to the system worldwide (except in polar regions), which allows having a stable and permanent link whereby data communications (video, images, control data) will be established. This data will be transmitted as long as the receiver part requests it.

One of the main challenges overcome has been that of having sufficient bandwidth to be able to transmit IP video from moving aircraft, as well as equipment capable of not losing the connection with the satellite during the flight.

Another one of the main challenges has been that of having sufficient technological capability to control, encode and compress the signals of the sensors to IP technology to thus be able to transmit them in real time via satellite with great quality and to be able to control the system remotely from the receiver.

The frequencies in which the system emits can likewise be used in any country as it works with internationally recognised frequencies for satellite communications, so there is no problem whatsoever when using this system anywhere in the world, facilitating its marketing.

The system is made up of two main parts: the part onboard the aircraft and the receiver part.

The onboard part has video and image capture sensors, an electronic switch, several encoders, a computer, a digital storage unit, a UPS, a battery and a satellite transmission system. The system is completed by the receiver part, which is made up of a computer with a modem/router providing it with Internet connection and can be located anywhere in the world where the transmitted data of the sensors located in the part onboard the aircraft will be received.

The operation is the following: in the part onboard the aircraft, each sensor has an associated encoder, these are in charge of encoding the analogue video to H.264 IP video, for subsequently sending it to a computer which stores this data in a digital storage unit. The computer is backed up with power by a UPS with its corresponding battery to assure its correct operation.

The video signal of each of the sensors, together with the control cables, are additionally sent to an electronic switch, which only has a video output signal and another control signal. The main function is to switch from one group of inputs to another to obtain the video and the control of a single sensor at the output. The switching is carried out by the encoder associated with the satellite transmission, making the switch switch by means of opening and closing a relay, getting the video signal and the control data from a single sensor to enter the encoder.

The video signal entering the encoder associated with the satellite transmission is digitalised and compressed to H.264 IP video, providing an output data stream comprised between 32 Kbps and 432 Kbps, thus adapting the signal to the bandwidth provided by the satellite.

The control data of the sensors is likewise encoded so that they can be controlled from the receiver part as if it was in the aircraft itself, being able to zoom in and move them 360°, freeing the pilot from the work load.

This system is conceived so that the aircraft can fly anywhere in the world (except the polar regions) transmitting live video and images to anywhere on the planet without limitations of coverage and with the advantage that the end user only needs a simple Internet connection and a PC; this will record, with the appropriate software, the public IP address of the satellite communication system of the onboard part, being able to see, control and change sensors remotely. The transmission from the aircraft will be done solely and exclusively when a user requests it remotely.

The equipment used allow it to be a system which can be used in wide range of aircraft models, since they are not disproportionate in size and contrary to other systems, the size of the antenna for satellite transmission is reduced.

The reasons why it is considered a versatile system are: the possibility of operating with different types of sensors, dimensions and weight of the system, characteristics of the antenna, the capability of the system to transmit high quality video and images as a result of the real time encoding to anywhere in the world and the possibility of controlling the sensors remotely. All this applied to the aeronautical sector is very useful for example for aircraft preventing and extinguishing fires, border surveillance tasks, pest control, flood control, crop control, school of fish control, etc.

### Description of the Drawings

To complement the description that is being made and for the purpose of aiding to better understand the features of the invention, a figure is attached as an integral part thereof in which the following has been depicted with an illustrative and non-limiting character:

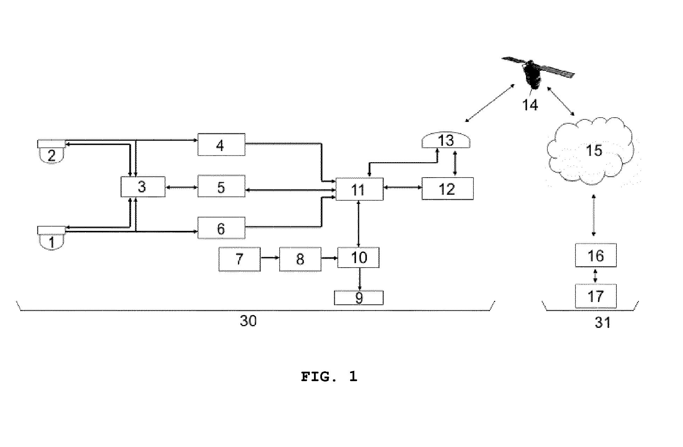

Figure 1 shows a block diagram of the aerial system for transmitting video and images via satellite in real time.

### Preferred Embodiment of the Invention

As can be seen in the attached figure, the aerial system for transmitting video and images via satellite in real time object of the present patent invention comprises two main parts, the onboard part (30) located in an aircraft and the receiver part (31) located anywhere in the world.

In the onboard part (30) there are sensors (1) and (2) which capture video and images and send an analogue signal which directly reaches two video encoders (4) and (6) and an electronic switch (3); said video encoders (4) and (6) provide an H.264 high quality IP video for its recording in a digital storage unit (9); the video encoder (5) controls the electronic switch (3), in which two analogue video signals and the control cables of each of the sensors (1) and (2) enter; the electronic switch (3) has only one video signal from a single sensor and its control cables, which are directly connected to the video encoder (5), as output; a signal can be remotely sent to the encoder (5) in order to make the electronic switch (3) switch so that it provides the signal of either sensor (1) or (2) at its output; the video output of said electronic switch (3) that reaches the encoder (5) is encoded to H.264 IP video or to an image, in the event that it is video, the transmission rate is demarcated between 32 Kbps and 432 Kbps to adapt it to the bandwidth of the channel provided by the satellite (14).

The IP video of the encoders (4) and (6) is sent to the mini PC (10) for its recording in the digital storage unit (9); it is done at 4-CIF at a maximum of 30 fps.

The video encoder (5) is controlled from the PC (17) located in the receiver part (31), being able to switch the view and the control between sensor (1) and sensor (2), and vice versa, by means of the electronic switch (3) which has the control cables and analogue video of each of the sensors (1) and (2) as input signals and the control and video cables of the selected sensor as output signals; at the same time the PC (17) of the receiver part can be recording everything that is being transmitted from the onboard part (30).

The data sent to the satellite (14) (mainly IP video, images and control data) is sent by means of an antenna (13) which automatically aims at the satellite; its dimensions and size are reduced.

The mini PC (10) is backed up by a UPS (8) with its battery (7), the purpose of which is to power and switch off the mini PC (10) when supply voltage is not detected; said UPS (8) transmits a command by cable to the mini PC (10) so that the software is closed correctly and there are no losses in the recordings made.

The control and modulation equipment (11) connects all the encoders (4), (5), (6) and the mini PC (10) by means of Ethernet and the amplifier and low noise filter (12) with coaxial cables; the control and modulation equipment (11) and the amplifier and low noise filter (12) are connected to the antenna (13), which has an integrated GPS and an NRS to know its location at all times and calculate its variations with respect to the satellite (14), in order to be constantly aimed at it and to not lose the communication link.

Any PC (17) together with a router/modem (16) with an Internet connection (15) anywhere in the world is capable of viewing the images and video which the sensors (1) and (2) capture in real time.

Said aerial system for transmitting video and images via satellite in real time can be used to capture all types of video and images from the entire electromagnetic spectrum that is both visible and invisible to the human eye, depending on the type of sensor which is introduced into the system; the data of these sensors is subsequently encoded, compressed and encapsulated in IP communication protocols to be able to be transmitted via satellite from the onboard part (30).

Said aerial system for transmitting video and images via satellite in real time is expandable, being able to add 3 additional sensors with their three encoders to have a greater view of the area to be monitored.

Having sufficiently described the nature of the present invention as well as a form of carrying it out into practice, it must only be added that said invention can undergo certain variations in shape and materials, as long as said alterations do not substantially vary the features which are claimed below.

## Claims

1. An aerial system for transmitting video and images via satellite in real time, of the type incorporated in aircraft for different applications, **characterised in that** it is essentially made up of two parts, the onboard part (30) located in an aircraft and the receiver part (31) located anywhere in the world; in the onboard part (30) there are sensors (1) and (2) which capture video and images and send an analogue signal which directly reaches two video encoders (4) and (6) and an electronic switch (3); said video encoders (4) and (6) provide an H.264 high quality IP video for its recording in a digital storage unit (9); the video encoder (5) controls the electronic switch (3), into which two analogue video signals and the control cables of each of the sensors (1) and (2) enter; the electronic switch (3) has only one video signal from a single sensor and its control cables, which are directly connected to the video encoder (5), as output; a signal can be remotely sent to the encoder (5) in order to make the electronic switch (3) switch so that it provides the signal of one sensor or (1) or another sensor (2) at its output; the output of the electronic switch (3) that reaches the encoder (5) is encoded to H.264 IP video or to an image, in the event that it is video, the transmission rate is demarcated between 32 Kbps and 432 Kbps to adapt it to the bandwidth of the channel provided by the satellite (14); the encoded video to be recorded in the digital storage unit (9) is done at 4-CIF at a maximum of 30 fps; the video encoder (5) is controlled from the PC (17) located in the receiver part (31), being able to change between sensor (1) and sensor (2) that is viewing and the control thereof by means of the electronic switch (3); the input signals of said electronic switch (3) are the control cables and analogue video of each of the sensors (1) and (2) and the control and video cables of the selected sensor are the output signal; at the same time the PC (17) of the receiver part can be recording everything that is being transmitted from the onboard part (30); the data sent to the satellite (14) (mainly IP video, images and control data) is sent by means of an antenna (13) which has automatic aiming.

2. The aerial system for transmitting video and images via satellite in real time according to claim 1, **characterised in that** the mini PC (10) is backed up by a UPS (8) with its battery (7), which powers and switches off the mini PC (10) when supply voltage is not detected; said UPS (8) transmits a command by cable to the mini PC (10) so that the software is closed correctly and there are no losses in the recordings made.

3. The aerial system for transmitting video and images via satellite in real time according to claim 1, **characterised in that** the control and modulation equipment (11) connects all the encoders (4), (5), (6) and the mini PC (10) by means of Ethernet connections; the connections between the amplifier and low noise filter (12), antenna (13) and the control and modulation equipment (11), connected by coaxial cables, allow the antenna to automatically aim at the satellite (14) as a result of integrated GPS and NRS modules.

4. The aerial system for transmitting video and images via satellite in real time according to claim 1, **characterised in that** any PC (17) together with a router/modem (16) with Internet connection (15) anywhere in the world is capable of viewing the video and images which the sensors (1) and (2) capture in real time.

5. The aerial system for transmitting video and images via satellite in real time according to claim 1, **characterised in that** it is expandable, being able to add 3 additional sensors with their three encoders to have a greater view of the area to be controlled and viewed.
